# EUROPÄISCHE PATENTSCHRIFT

(11) **EP 4 635 011 B1**
(45) Veröffentlichungstag und Bekanntmachung des Hinweises auf die Patenterteilung: **02.09.2026**
(21) Anmeldenummer: 23828377.4
(22) Anmeldetag: 12.12.2023
(51) Int. Cl.: H01M 8/0297, C25B 9/65, H01M 8/2465, H01M 50/503, H01M 50/54, C25B 1/04

(54) **ELEKTRISCHE KONTAKTIERUNGSANORDNUNG FÜR EINE ELEKTROCHEMISCHE ZELLEINHEIT**
ELECTRIC CONTACTING ASSEMBLY FOR AN ELECTROCHEMICAL CELL UNIT
DISPOSITIF DE MISE EN CONTACT ÉLECTRIQUE POUR UN ENSEMBLE CELLULE ÉLECTROCHIMIQUE

(30) Priorität: 12.12.2022 DE 102022213454
(43) Veröffentlichungstag der Anmeldung: 22.10.2025
(73) Patentinhaber: Robert Bosch GmbH, 70442 Stuttgart (DE)
(72) Erfinder: NICK, Patrick, 71634 Ludwigsburg (DE); GENTE, Arnold, 70469 Stuttgart (DE); SPINDLER, Susanne, 70197 Stuttgart (DE)
(86) Internationale Anmeldenummer: PCT/EP2023/085267
(87) Internationale Veröffentlichungsnummer: WO 2024/126445

(56) Entgegenhaltungen:
- EP-A1- 3 373 373
- EP-A1- 3 605 659
- DE-A1- 102018 213 688

## Beschreibung

Die Erfindung betrifft eine elektrische Kontaktierungsanordnung für eine elektrochemische Zelleinheit, wie sie Verwendung findet, um eine Vielzahl von elektrochemischen Zelleinheiten zu kontaktieren und vorzugsweise mit einer Zellüberwachungseinheit zu verbinden.

### Stand der Technik

Eine elektrochemische Zelleinheit ist beispielsweise eine Brennstoffzelle und dient der Erzeugung von elektrischer aus chemischer Energie. Eine weitere bekannte elektrochemische Zelleinheit ist ein sogenannter Elektrolyseur, mit dem chemische Energie - insbesondere Wasserstoff - aus Wasser und Strom erzeugt werden kann. Dabei umfasst die elektrochemische Zelleinheit meist eine Vielzahl von elektrochemischen Zellen, die in Reihe geschaltet sind, um möglichst viel Leistung pro Volumen zur Verfügung zu haben. Die einzelnen elektrochemischen Zellen werden dabei durch Bipolarplatten begrenzt, an denen die elektrische Spannung an der einzelnen Zelle abgegriffen werden kann und die auch die notwendigen Kanäle zur Zu- und Abführung der chemischen Stoffe und des Kühlmediums bilden. Da alle elektrochemischen Zellen einer Zelleinheit beim Betrieb in Reihe geschaltet ist, ist die ordnungsgemäße Funktion aller Zellen wichtig. Dies lässt sich bei Brennstoffzellen insbesondere an der erzeugten elektrischen Spannung ablesen, die bei jeder einzelnen Zelle ca. 0,8 - 1,0 Volt beträgt und die während des Betriebs der elektrochemischen Zelleinheit ungefähr konstant bleiben sollte. Weist eine einzelne elektrochemische Zelle eine deutliche Abweichung davon auf, so deutet dies auf eine Fehlfunktion hin. Diese Fehlfunktion muss frühzeitig behoben werden, da dies sonst ein Versagen der ganzen elektrochemischen Zelleinheit zur Folge kann.

Zur Überwachung der von den einzelnen elektrochemischen Zellen erzeugten Spannung wird ein sogenanntes Cell Voltage Monitoring (CVM) verwendet. Eine solche Zellüberwachungseinheit ist beispielsweise aus der Patentanmeldung DE 10 2020 204 292 A1 bekannt. Diese Überwachungseinheit kontaktiert in der Regel jede einzelne Bipolarplatte und erlaubt so die Messung der elektrischen Spannung an jeder einzelnen Zelle. Registriert die CVM eine Spannungsabweichung an einer Zelle, so wird ein Fehler ausgegeben und es können entsprechende Maßnahmen eingeleitet werden. In der Regel muss die elektrochemische Zelleinheit bei einer Fehlfunktion möglichst schnell abgeschaltet werden, da sonst irreparable Schäden drohen. Da die einzelnen elektrochemischen Zellen relativ flach sind - meist nur 1 bis 2 mm - und in großen Stapeln von 100 bis 500 Zellen übereinander gestapelt werden, ist die Kontaktierung jeder einzelnen elektrochemischen Zelle bzw. Bipolarplatte relativ schwierig bzw. aufwändig, was bei der Fertigung der elektrochemischen Zelleinheit ein bedeutender Kostenfaktor ist. Kontaktierungsanordnungen sind aus den Patentanmeldungen DE 10 2018 213688 A sowie EP 3 373 373 A1 bekannt.

### Vorteile der Erfindung

Die erfindungsgemäße elektrische Kontaktierungsanordnung nach Anspruch 1 für eine elektrochemische Zelleinheit weist den Vorteil auf, dass eine einfache und kostengünstige Kontaktierung jeder einzelnen Bipolarplatte möglich ist. Dazu weist die elektrische Kontaktierungsanordnung ein Gehäuse auf, das eine Vielzahl von schlitzförmigen Ausnehmungen zur Aufnahme jeweils einer Kontaktierungsfahne, wobei die Kontaktierungsfahne mit einer Bipolarplatte verbunden oder einstückig mit der Bipolarplatte ausgebildet ist. Das Gehäuse weist dabei eine geschlossene Seite auf, wobei jede Ausnehmung durch eine erste Bohrung und eine zweite Bohrung mit der geschlossenen Seite verbunden ist. In der Ausnehmung ist ein Kontaktierungselement angeordnet, das einen ersten Stift, einen zweiten Stift und einen Kontaktierungsabschnitt aufweist, wobei die Stifte in jeweils einer der Bohrungen angeordnet sind und der Kontaktierungsabschnitt in die Ausnehmung ragt. Dabei ist der Kontaktierungsabschnitt so beschaffen, dass eine Kontaktierungsfahne zwischen dem Kontaktierungsabschnitt und der Wand der Ausnehmung elektrisch kontaktierend einklemmbar ist.

Die elektrochemische Zelleinheit weist eine Vielzahl von elektrochemischen Zellen auf, die übereinandergestapelt sind. Die elektrochemischen Zellen werden durch Bipolarplatten gebildet, die zwei benachbarte elektrochemische Zellen begrenzen und in denen die elektrischen Anschlüsse ausgeführt sind. Die elektrischen Anschlüsse werden in Form von Kontaktierungsfahnen nach außen geführt, wobei die Kontaktierungsfahnen einstückig mit der Bipolarplatte ausgebildet sind oder durch ein separates, mit der Bipolarplatte verbundenes Bauteil. Die Kontaktierungsfahnen können leicht in die schlitzförmigen Ausnehmungen des Gehäuses der elektrischen Kontaktierungsanordnung eingeführt werden. Durch den Kontaktierungsabschnitt des Kontaktierungselements, das sich innerhalb jeder Ausnehmung befindet, wird die Bipolarplatte mit dem Einstecken in das Gehäuse kontaktiert. Dieser elektrische Kontakt wird durch das Kontaktierungselement auf die geschlossene Seite des Gehäuses geführt, wo ein Anschluss an eine entsprechende Auswerteeinheit erfolgen kann. Diese einfach aufgebaute Einheit zur elektrischen Kontaktierung ist kostengünstig herstellbar und eignet sich, eine große Anzahl von elektrochemischen Zellen zu kontaktieren und mit einer elektrischen Zellüberwachungseinheit zu verbinden. Abschnitt

In einer ersten vorteilhaften Ausgestaltung sind die schlitzförmigen Ausnehmungen parallel zueinander ausgerichtet, so dass eine kammartige Trägerstruktur gebildet wird. Insbesondere kann das Gehäuse im Wesentlichen quaderförmig ausgebildet sein und neben der geschlossenen Seite eine gegenüberliegende, offene Seite und zwei Seitenflächen aufweisen, wobei die Seitenflächen die geschlossene Seite und die offene Seite verbinden. Dadurch ergeben sich Ausnehmungen, die an drei Seiten offen sind, so dass die Kontaktierungsfahnen leicht eingeführt werden können. Solche kammartigen Trägerstrukturen lassen sich beispielsweise durch Sägen eines Blocks herstellen, wobei der Block und damit das Gehäuse aus einem elektrisch nichtleitenden Material gefertigt sind, beispielsweise Kunststoff oder Keramik.

Der erste Stift des Kontaktierungselements ist in vorteilhafter Weise in der Montageposition in einer Bohrung angeordnet und ragt aus der geschlossenen Seite des Gehäuses heraus, während der zweite Stift nicht über die geschlossene Seite hinausragt. Da der erste Stift im elektrischen Kontakt mit dem Kontaktierungsabschnitt des Kontaktierungselements ist, ergibt sich eine elektrische Verbindung zwischen dem über das Gehäuse hinausragenden Stift und in der Kontaktierungsfahne bzw. der Bipolarplatte. Der zweite Stift, der ebenfalls in einer Bohrung aufgenommen ist, verhindert, dass das Kontaktierungselement innerhalb der Ausnehmung verrutscht oder sich dreht und damit die Kontaktierung unterbricht.

In weiterer vorteilhafter Ausgestaltung ist die Dicke des Kontaktierungsabschnitts des Kontaktierungselements in einer Stapelrichtung der elektrischen Kontaktierungsanordnung bzw. des Gehäuses kleiner als die Dicke der Ausnehmung. Dadurch ergibt sich Raum für die Aufnahme der Kontaktierungsfahne und für das Einklemmen der Kontaktierungsfahne zwischen dem Kontaktierungsabschnitt des Kontaktierungselements und der Wand der Ausnehmung.

In weiterer vorteilhafter Ausgestaltung sind die ersten Bohrungen, die jeweils eine Ausnehmung mit der geschlossenen Seite des Gehäuses verbinden, in einer Reihe angeordnet, wobei diese Reihe in einer Stapelrichtung des Gehäuses verläuft, die auch der Stapelrichtung der elektrochemischen Zelle entspricht, wenn die elektrische Kontaktierungsanordnung an der elektrochemischen Zelleinheit montiert ist. Auch die zweiten Bohrungen sind in vorteilhafter Weise in einer Reihe angeordnet und ebenfalls in Stapelrichtung übereinander.

In weiterer vorteilhafter Ausgestaltung sind die Kontaktierungselemente so in den Ausnehmungen angeordnet, dass die ersten Kontaktierungsstifte abwechselnd aus den ersten Bohrungen und zweiten Bohrungen hinausragen, so dass in benachbarten Ausnehmungen alternierend die ersten Kontaktierungsstifte aus der ersten Bohrung und der zweiten Bohrung hinausragen. Dadurch ergibt sich ein relativ großer Abstand der Kontaktierungsstifte zueinander, die sich dann leichter mit einer elektrischen Auswerteeinheit verbinden lassen.

### Zeichnung

In der Zeichnung sind verschiedene Ausführungsbeispiele der elektrischen Kontaktierungsanordnung dargestellt. Es zeigt die
- Fig. 1: eine perspektivische Darstellung einer elektrischen Kontaktierungsanordnung bzw. des Gehäuses der elektrischen Kontaktierungsanordnung, wobei hier der Übersichtlichkeit halber nur ein kleiner Teil der elektrischen Kontaktierungsanordnung gezeigt ist,
- Fig. 2a: zeigt das elektrische Kontaktierungselement,
- Fig. 2b: das gleiche elektrische Kontaktierungselement in anderer Orientierung,
- Fig. 3a: die Einbauposition des Kontaktierungselements innerhalb des Gehäuses,
- Fig. 3b: die Einbauposition des Kontaktierungselements in einer benachbarten Ausnehmung des Gehäuses
- Fig. 4: in einem Querschnitt durch das Gehäuse die Kontaktierung der Kontaktierungsfahne und
- Fig. 5: die elektrische Kontaktierungsanordnung mit montierten Kontaktierungselementen in einer perspektivischen Ansicht.

### Beschreibung der Ausführungsbeispiele

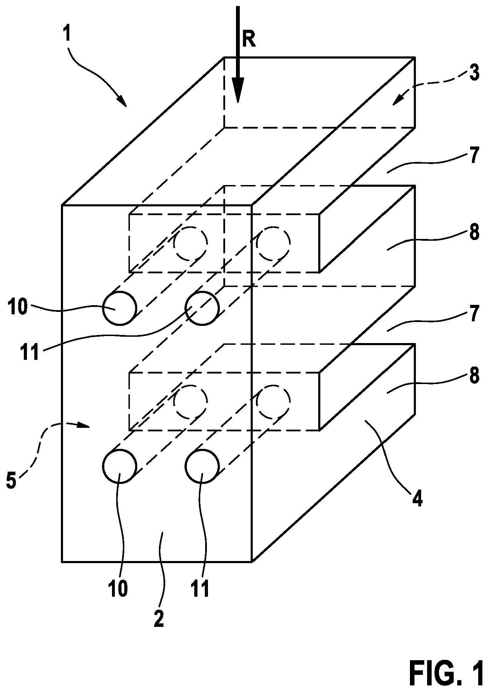

In **Fig. 1** ist eine erfindungsgemäße elektrische Kontaktierungsanordnung perspektivisch dargestellt, wobei hier nur das Gehäuse gezeigt ist. Das Gehäuse 1 ist quaderförmig ausgebildet und weist eine geschlossene Seite 2 auf, der eine offene Seite 3 gegenüberliegt. Beide Seiten 2, 3 sind durch Seitenflächen 4 und 5 miteinander verbunden. Das Gehäuse 1 weist eine Vielzahl von schlitzförmigen Ausnehmungen 7 auf, die zur offenen Seiten 3 und zu den Seitenflächen 4 und 5 offen ausgebildet und zueinander parallel sind. Dadurch entsteht eine kammartige Struktur des Gehäuses 1 mit Ausnehmungen 7, die nach 3 Seiten des quaderförmigen Gehäuses 1 offen sind. Die Ausnehmungen 7 sind jeweils über eine ersten Bohrung 10 und eine zu dieser parallelen zweiten Bohrung 11 mit der geschlossenen Seite 2 des Gehäuses 1 verbunden. Die Bohrungen 10, 11 bilden an der geschlossenen Seite 2 erste Öffnungen 110 bzw. zweite Öffnungen 111. Alle ersten Bohrungen 10 und zweiten Bohrungen 11 sind in Stapelrichtung R übereinander in einer Reihe angeordnet, so dass entsprechend auch alle ersten Öffnungen 110 und zweiten Öffnungen 111 eine Reihe bilden. Das in Fig. 1 dargestellte Gehäuse 1 zeigt der Übersichtlichkeit halber nur zwei Ausnehmungen 7. In realen Anwendungen sind in der Regel deutlich mehr Ausnehmungen 7, ggf. einige hundert entsprechend der Anzahl der Kontakte der elektrochemischen Zelleinheit.

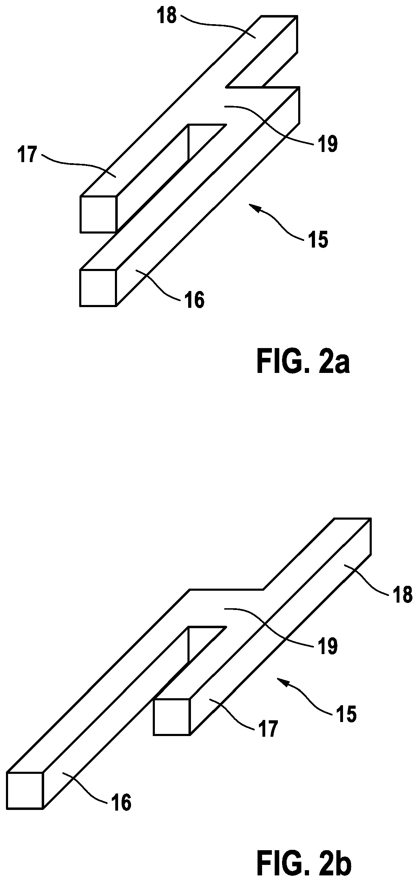

In **Fig. 2a** ist ein Kontaktierungselement 15 dargestellt, wie es zur Montage in einer Ausnehmung 7 vorgesehen ist. Das Kontaktierungselement 15 weist einen ersten Stift 16 und einen zweiten Stift 17 auf, die parallel zueinander sind, wobei der erste Stift 16 länger als der zweite Stift 17 ist. Beide Stifte 16, 17 sind über einen Verbindungsabschnitt 19 miteinander verbunden. Mit dem Verbindungsabschnitt 19 ist darüber hinaus ein Kontaktierungsabschnitt 18 verbunden, der dem zweiten Stift 17 gegenüberliegt, so dass das Kontaktierungselement 15 im Wesentlichen die Form eines h aufweist. **Fig. 2b** zeigt das gleiche Kontaktierungselement 15, allerdings hier 180 Grad gedreht, was der Einbauposition in einer benachbarten Ausnehmung 7 des Gehäuses 1 entspricht. In **Fig. 2a, 2b** weisen die Stifte 15, 16 einen quadratischen Querschnitt auf; es kann aber auch ein Kontaktierungselement 15 mit einem anderweitig geformtem Querschnitt, beispielsweise rund, oval oder rechteckig, verwendet werden.

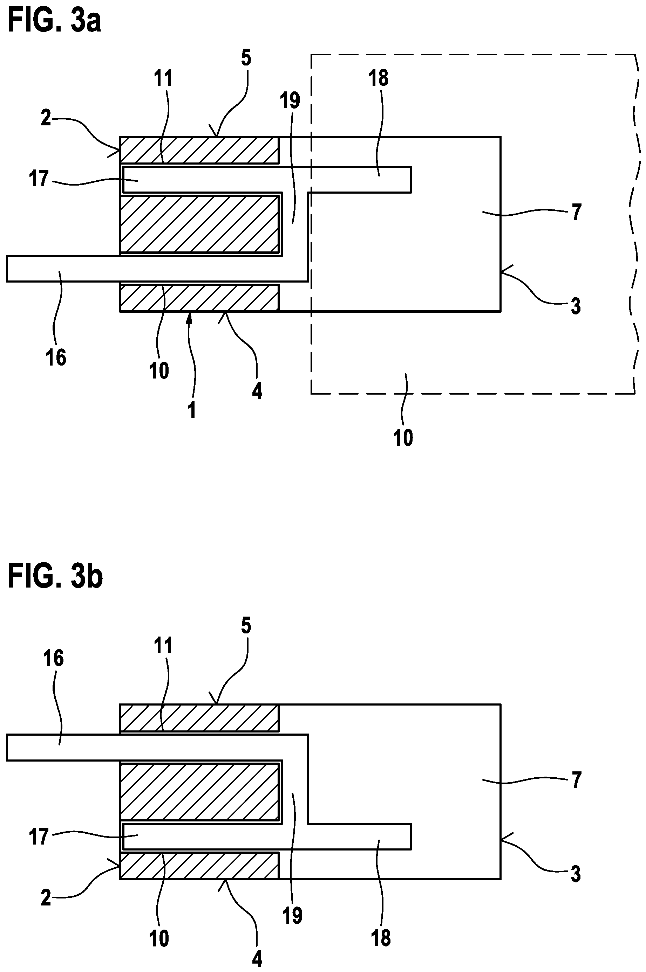

**Fig. 3a** zeigt in einem Querschnitt die Einbauposition des Kontaktierungselements 15 im Gehäuse 1 bzw. in einer Ausnehmung 7. Der erste Stift 16 ist in der ersten Bohrung 10 und der zweite Stift 17 in der zweiten Bohrung 11 angeordnet, wobei der erste Stift 16 aufgrund seiner Länge über die geschlossene Seite 2 des Gehäuses 1 hinausragt, wo er elektrisch kontaktiert und mit einer Spannungsüberwachungseinheit verbunden werden kann. Der Kontaktierungsabschnitt 18 ragt in die Ausnehmung 7 hinein, jedoch nicht über die offene Seite 3 des Gehäuses 1 hinaus. Auf der rechten Seite der Figur 3a ist eine Kontaktierungsfahne 22 dargestellt, die elektrisch mit einer Bipolarplatte verbunden oder die Teil einer Bipolarplatte ist. Die Bipolarplatte ist dabei ein Teil einer elektrochemischen Zelleinheit, etwa einer Brennstoffzelle oder einem Elektrolyseur. Die Kontaktierungsfahne ragt in die Ausnehmung 7 hinein und ist dort in Kontakt mit dem Kontaktierungsabschnitt 18 des Kontaktierungselements 15 und damit mit diesem elektrisch verbunden. Damit wird eine elektrische Verbindung zwischen dem über die geschlossene Seite 2 des Gehäuses 1 hinausragenden ersten Stift 16 des Kontaktierungselements 15 und der Bipolarplatte hergestellt. **Fig. 3b** zeigt in derselben Darstellung wie **Fig. 3a** die Einbauposition in einer benachbarten Ausnehmung 7 des Gehäuses 1. Hier ist das Kontaktierungselement um 180 Grad in der Ebene gedreht, so dass nun der erste Stift 16 durch die zweite Bohrung 11 und der zweite Stift 17 durch die erste Bohrung 10 dieser Ausnehmung 7 ragt.

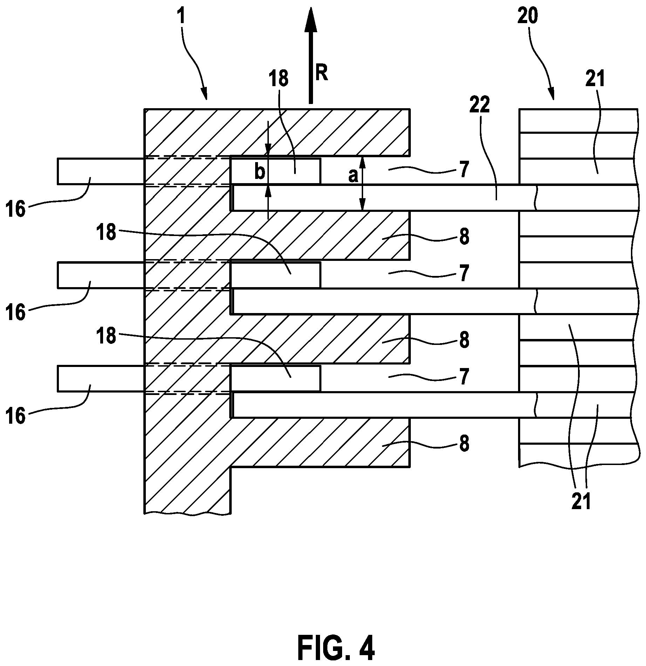

**Fig. 4** zeigt die Kontaktierung einer elektrochemischen Zelleinheit 20 durch die elektrische Kontaktierungsanordnung in einem Längsschnitt durch das Gehäuse 1. Die elektrochemische Zelleinheit 20 weist eine Vielzahl von übereinander gestapelten elektrochemischen Zellen 21 auf, wobei die einzelnen elektrochemischen Zellen 21 durch Bipolarplatten gebildet werden. Jede Bipolarplatte begrenzt dabei zwei benachbarte elektrochemische Zellen 21 und bildet auch jeweils einen elektrischen Kontakt der zugehörigen elektrochemischen Zelle. Der elektrische Kontakt der Bipolarplatte kann in Form einer Kontaktierungsfahne 22 nach außen geführt sein, die über den Rand der elektrochemischen Zelleinheit 20 hinausragt und jeweils in eine Ausnehmung 7 des Gehäuses 1 hineinragt. Die Kontaktierungsfahne 22 kann dabei ein Teil der Bipolarplatte sein oder als separates Bauteil mit der Bipolarplatte verbunden sein. Da die schlitzförmige Ausnehmung 7 in Stapelrichtung eine Dicke a aufweist, die größer ist als die Dicke b des Kontaktierungsabschnitts 18, kann die Kontaktierungsfahne 22 zwischen dem Kontaktierungsabschnitt 18 und der Wandung der Ausnehmung 7 geklemmt und so elektrisch mit dem Kontaktierungselement 15 verbunden werden.

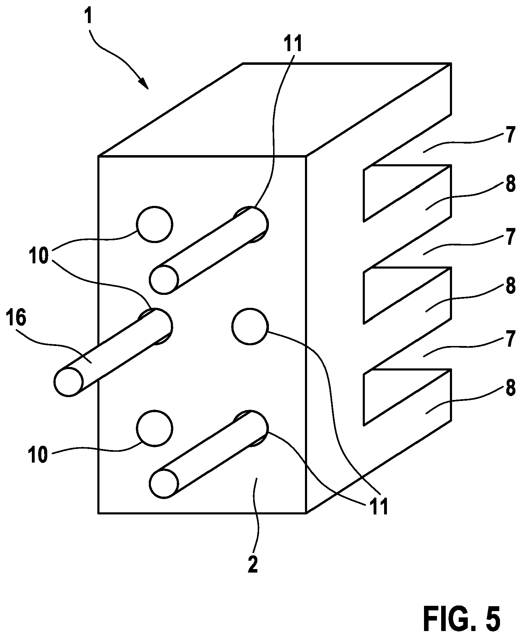

Zur Montage der elektrischen Kontaktierungsanordnung wird das Gehäuse 1 mit den Kontaktierungselementen 15 versehen, die abwechselnd orientiert - wie in **Fig. 2a** und **Fig. 2b** gezeigt - eingebaut werden. Die ersten Stifte 16 ragen abwechselnd durch die erste Bohrung 10 und die zweite Bohrung 11 der Ausnehmungen 7 nach außen, so dass sie in der in **Fig. 5** gezeigten Weise über die geschlossene Seite 2 des Gehäuses 1 hinausragen. Durch die abwechselnde Orientierung der Kontaktierungselemente 15 erhöht sich der Abstand der benachbarten ersten Stifte 16 zueinander, was die Kontaktierung mit einer elektrischen Auswerteeinheit erleichtert. Dabei ist zu bedenken, dass eine elektrochemische Zelleinheit häufig mehrere hundert elektrochemische Zellen umfasst, die nur eine Dicke von ca. 1 mm aufweisen. Entsprechend klein ist der Abstand der ersten Stifte 16 zueinander. Anschließend wird die elektrische Kontaktierungsanordnung an eine elektrochemische Zelleinheit herangeführt, so dass jeweils eine Kontaktierungsfahne 22 in eine Ausnehmung 7 hineingleitet und dort zwischen dem Kontaktierungsabschnitt 18 des jeweiligen Kontaktierungselements 15 und der Wand der Ausnehmung 7 geklemmt und damit elektrisch kontaktiert wird.

Das Kontaktierungselement 15 besteht vorzugsweise aus einem metallischen Draht mit guter elektrischer Leitfähigkeit. Dabei kann der Draht einen runden, quadratischen oder rechteckigen Querschnitt aufweisen, wie in **Fig. 2a** und **Fig. 2b** beispielhaft gezeigt. Es können jedoch auch andere Querschnitte verwendet werden, beispielsweise oval, um die Klemmung der Kontaktierungsfahne 22 zu verbessern. In jedem Fall müssen die Abmessungen der Stifte 16, 17 so auf die Bohrungen 10, 11 abgestimmt sein, dass die Stifte 16, 17 in die Bohrungen 10, 11 eingeführt werden können. Entsprechend können die Bohrungen 10, 11 auch beispielsweise mit einem quadratischen, rechteckigen oder ovalen Querschnitt gefertigt sein.

## Patentansprüche

1. Elektrische Kontaktierungsanordnung für eine elektrochemischen Zelleinheit (20), mit einem Gehäuse (1), das eine Vielzahl von schlitzförmigen Ausnehmungen (7) zur Aufnahme jeweils einer Kontaktierungsfahne (22) aufweist, wobei das Gehäuse (1) eine geschlossene Seite (2) aufweist,
**dadurch gekennzeichnet, dass**
jede Ausnehmung (7) durch eine erste Bohrung (10) und eine zweite Bohrung (11) mit der geschlossenen Seite (2) verbunden ist und in der Ausnehmung (7) ein Kontaktierungselement (15) angeordnet ist, das einen ersten Stift (16), einen zweiten Stift (17) und einen Kontaktierungsabschnitt (18) aufweist, wobei die Stifte (16; 17) in jeweils einer der Bohrungen (10; 11) angeordnet sind, und der Kontaktierungsabschnitt (18) in die Ausnehmung (7) ragt, so dass eine Kontaktierungsfahne (22) zwischen dem Kontaktierungsabschnitt (18) und der Wand der Ausnehmung (7) zur Herstellung einer elektrischen Verbindung zwischen dem Kontaktierungselement (15) und der Kontaktierungsfahne (22) einklemmbar ist.

2. Elektrische Kontaktierungsanordnung nach Anspruch 1, **dadurch gekennzeichnet, dass** die schlitzförmigen Ausnehmungen (7) parallel zueinander ausgerichtet sind, so dass eine kammartige Trägerstruktur gebildet wird.

3. Elektrische Kontaktierungsanordnung nach Anspruch 2, **dadurch gekennzeichnet, dass** das Gehäuse (1) im Wesentlichen quaderförmig ausgebildet ist und eine der geschlossenen Seite (2) gegenüberliegende offene Seite (3), eine erste Seitenfläche (4) und eine zweite Seitenfläche (5) aufweist, wobei die Seitenflächen (4; 5) die geschlossene Seite (2) und die offene Seite (3) verbinden.

4. Elektrische Kontaktierungsanordnung nach Anspruch 3, **dadurch gekennzeichnet, dass** die Ausnehmungen (7) zur offenen Seite (3) und zu den Seitenflächen (4; 5) offen sind.

5. Elektrische Kontaktierungsanordnung nach einem der Ansprüche 1 bis 4, **dadurch gekennzeichnet, dass** das der erste Stift (16) des Kontaktierungselements (15) in der Montageposition aus der geschlossenen Seite (2) des Gehäuses (1) herausragt und der zweite Stift (17) nicht über die geschlossene Seite (2) hinausragt.

6. Elektrische Kontaktierungsanordnung nach Anspruch 5, **dadurch gekennzeichnet, dass** der erste Stift (16) mit dem Kontaktierungsabschnitt (18) elektrisch verbunden ist.

7. Elektrische Kontaktierungsanordnung nach einem der Ansprüche 1 bis 6, **dadurch gekennzeichnet, dass** die Dicke (b) des Kontaktierungsabschnitts (18) des Kontaktierungselements (15) in einer Stapelrichtung (R) der schlitzförmigen Ausnehmung (7) kleiner ist als die Dicke (a) der Ausnehmung (7).

8. Elektrische Kontaktierungsanordnung nach einem der Ansprüche 1 bis 7, **dadurch gekennzeichnet, dass** die ersten Bohrungen (10) und die zweiten Bohrungen (11) an der geschlossenen Seite (2) des Gehäuses (1) jeweils eine Öffnung (110; 111) bilden und die Öffnungen (110; 111) der ersten Bohrungen (10) und der zweiten Bohrungen (11) jeweils in einer Stapelrichtung (R) übereinander angeordnet sind.

9. Elektrische Kontaktierungsanordnung nach Anspruch 8, **dadurch gekennzeichnet, dass** die ersten Kontaktierungsstifte (16) der Kontaktierungselemente (15) bei benachbarten Ausnehmungen (7) abwechselnd aus den ersten Bohrungen (10) und zweiten Bohrungen (11) hinausragen.

## Claims

1. Electrical contacting arrangement for an electrochemical cell unit (20), having a housing (1) which has a plurality of slot-like recesses (7) for receiving one contacting lug (22) each, wherein the housing (1) has a closed side (2),
**characterized in that**
each recess (7) is connected to the closed side (2) by a first bore (10) and a second bore (11) and a contacting element (15) is arranged in the recess (7), which contacting element has a first pin (16), a second pin (17) and a contacting portion (18), wherein the pins (16; 17) are arranged in one of the bores (10; 11) each, and the contacting portion (18) projects into the recess (7), so that a contacting lug (22) can be clamped between the contacting portion (18) and the wall of the recess (7) for establishing an electrical connection between the contacting element (15) and the contacting lug (22).

2. Electrical contacting arrangement according to Claim 1, **characterized in that** the slot-like recesses (7) are oriented parallel to each other, so that a comblike support structure is formed.

3. Electrical contacting arrangement according to Claim 2, **characterized in that** the housing (1) is substantially cuboidal and has an open side (3) situated opposite the closed side (2), a first side face (4) and a second side face (5), wherein the side faces (4; 5) connect the closed side (2) and the open side (3).

4. Electrical contacting arrangement according to Claim 3, **characterized in that** the recesses (7) are open to the open side (3) and to the side faces (4; 5).

5. Electrical contacting arrangement according to any of Claims 1 to 4, **characterized in that** the first pin (16) of the contacting element (15) projects from the closed side (2) of the housing (1) and the second pin (17) does not project beyond the closed side (2) in the fitted position.

6. Electrical contacting arrangement according to Claim 5, **characterized in that** the first pin (16) is electrically connected to the contacting portion (18).

7. Electrical contacting arrangement according to any of Claims 1 to 6, **characterized in that** the thickness (b) of the contacting portion (18) of the contacting element (15) in a stacking direction (R) of the slot-like recess (7) is smaller than the thickness (a) of the recess (7).

8. Electrical contacting arrangement according to any of Claims 1 to 7, **characterized in that** the first bores (10) and the second bores (11) on the closed side (2) of the housing (1) each form an opening (110; 111) and the openings (110; 111) of the first bores (10) and the second bores (11) are each arranged one above the other in a stacking direction (R).

9. Electrical contacting arrangement according to Claim 8, **characterized in that** the first contacting pins (16) of the contacting elements (15) project alternately from the first bores (10) and second bores (11) given adjacent recesses (7).

## Revendications

1. Dispositif de mise en contact électrique pour un ensemble de cellule électrochimique (20), comprenant un boîtier (1) qui possède une pluralité d'évidements (7) en forme de fentes destinés à recevoir chacun une patte de mise en contact (22), le boîtier (1) présentant un côté fermé (2),
**caractérisé en ce que**
chaque évidement (7) est relié au côté fermé (2) par un premier trou (10) et un deuxième trou (11), et dans l'évidement (7) est disposé un élément de mise en contact (15), lequel possède une première broche (16), une deuxième broche (17) et une portion de mise en contact (18), les broches (16 ; 17) étant respectivement disposées dans l'un des trous (10 ; 11) et la portion de mise en contact (18) faisant saillie dans l'évidement (7), de sorte qu'une patte de mise en contact (22) peut être serrée entre la portion de mise en contact (18) et la paroi de l'évidement (7) afin d'établir une liaison électrique entre l'élément de mise en contact (15) et la patte de mise en contact (22).

2. Dispositif de mise en contact électrique selon la revendication 1, **caractérisé en ce que** les évidements (7) en forme de fentes sont orientés parallèlement les uns aux autres de telle sorte qu'une structure porteuse en forme de peigne est formée.

3. Dispositif de mise en contact électrique selon la revendication 2, **caractérisé en ce que** le boîtier (1) est réalisé sensiblement de forme parallélépipédique et possède un côté ouvert (3) opposé au côté fermé (2), une première surface latérale (4) et une deuxième surface latérale (5), les surfaces latérales (4 ; 5) reliant le côté fermé (2) et le côté ouvert (3).

4. Dispositif de mise en contact électrique selon la revendication 3, **caractérisé en ce que** les évidements (7) sont ouverts vers le côté ouvert (3) et vers les surfaces latérales (4 ; 5).

5. Dispositif de mise en contact électrique selon l'une des revendications 1 à 4, **caractérisé en ce que** la première broche (16) de l'élément de mise en contact (15), dans la position de montage, dépasse du côté fermé (2) du boîtier (1) et la deuxième broche (17) ne dépasse pas au-dessus du côté fermé (2).

6. Dispositif de mise en contact électrique selon la revendication 5, **caractérisé en ce que** la première broche (16) est reliée électriquement à la portion de mise en contact (18).

7. Dispositif de mise en contact électrique selon l'une des revendications 1 à 6, **caractérisé en ce que** l'épaisseur (b) de la portion de mise en contact (18) de l'élément de mise en contact (15), dans une direction d'empilement (R) de l'évidement (7) en forme de fente, est inférieure à l'épaisseur (a) de l'évidement (7).

8. Dispositif de mise en contact électrique selon l'une des revendications 1 à 7, **caractérisé en ce que** les premiers trous (10) et les deuxièmes trous (11) sur le côté fermé (2) du boîtier (1) forment respectivement une ouverture (110 ; 111) et les ouvertures (110 ; 111) des premiers trous (10) et des deuxièmes trous (11) sont respectivement disposées les unes au-dessus des autres dans une direction d'empilement (R).

9. Dispositif de mise en contact électrique selon la revendication 8, **caractérisé en ce que** les premières broches de mise en contact (16) des éléments de mise en contact (15), au niveau d'évidements (7) voisins, dépassent en alternance des premiers trous (10) et des deuxièmes trous (11).
